# EUROPÄISCHE PATENTSCHRIFT

(11) **EP 1 862 953 B1**
(45) Veröffentlichungstag und Bekanntmachung des Hinweises auf die Patenterteilung: **27.08.2014**
(21) Anmeldenummer: 07005359.0
(22) Anmeldetag: 15.03.2007
(51) Int. Cl.: G06K 19/077

(54) **Verfahren zur kontaktlosen Übertragung von Daten und / oder Energie zwischen einem Endgerät und wenigstens einem Transponder**
Method for contactless data and/or energy transmission between a terminal and at least one transponder
Procédé destiné à la transmission sans contact de données et / ou d'énergie entre un terminal et au moins un transpondeur

(30) Priorität: 29.05.2006 DE 102006024948
(43) Veröffentlichungstag der Anmeldung: 05.12.2007
(73) Patentinhaber: Giesecke & Devrient GmbH, 81677 München (DE)
(72) Erfinder: Finkenzeller, Klaus, 85774 Unterföhring (DE)

(56) Entgegenhaltungen:
- EP-A1- 1 910 872
- WO-A-98/36507
- WO-A2-2005/031983
- DE-A1- 4 207 779
- US-A- 5 451 763

## Beschreibung

Die Erfindung bezieht sich auf ein Verfahren zur kontaktlosen Übertragung von Daten und/ oder Energie zwischen einem Endgerät und wenigstens einem Transponder. Weiterhin bezieht die Erfindung sich auf eine Transponderanordnung.

Als Transponder wird im folgenden eine Einheit mit wenigstens einem integrierten Schaltkreis und einer daran angeschlossenen Antenneneinrichtung zur kontaktlosen Datenübertragung bezeichnet. Je nach Ausbildung des Transponders kann auch eine Energieübertragung über die Antenneneinrichtung vorgesehen sein.

Es ist bereits eine Vielzahl von Verfahren bekannt, mit denen zwischen einem Endgerät und einem Transponder Energie und Daten auf kontaktlosem Weg übertragen werden können. Da der Transponder in vielen Fällen keine eigene Energiequelle aufweist, erfolgt die Energieversorgung des Transponders in der Regel durch eine kontaktlose Energieübertragung vom Endgerät zum Transponder. Die kontaktlose Datenübertragung kann entweder unidirektional oder bidirektional erfolgen, wobei im Falle einer unidirektionalen Datenübertragung die Daten in der Regel vom Transponder zum Endgerät übertragen werden, d. h. das Endgerät liest den Transponder aus.

Für die Energie- und Datenübertragung zwischen einem Endgerät und einem Transponder existieren eine Reihe von Normen, welche die Übertragung näher spezifizieren, um einen zuverlässigen Betrieb zu gewährleisten. Beispielsweise kann eine induktive Kopplung des Transponders mit dem Endgerät gemäß der Norm ISO/IEC 14443 erfolgen. Diese Norm sieht eine Energie- und Datenübertragung mit Hilfe eines magnetischen Wechselfelds der Frequenz 13,56 MHz vor, wobei die Reichweite typischerweise etwa 10 cm beträgt.

Probleme bei der Datenübertragung können insbesondere dann auftreten, wenn mehrere Transponder so nahe beieinander angeordnet sind, dass es zwischen den Transpondern zu einer induktiven Kopplung kommt und dadurch die Resonanzfrequenz der einzelnen Transponder verstimmt wird. Dies ist beispielsweise dann der Fall, wenn die Transponder in einem Stapel angeordnet werden oder Bestandteil eines mehrseitigen Ausweisdokuments sind. Bei einem Stapel von Transpondern reduziert sich die Resonanzfrequenz näherungsweise gemäß der Wurzel aus der Anzahl der induktiv gekoppelten Transponder. Durch die Verstimmung der Resonanzfrequenz der Transponder kann sich die Resonanzfrequenz so weit von der Sendefrequenz des Endgeräts entfernen, dass keine ausreichende Energieübertragung vom Endgerät zum jeweiligen Transponder erfolgt und der Transponder nicht betriebsbereit ist, obwohl er in einem normgemäßen magnetischen Wechselfeld angeordnet ist, in dem ein Betrieb eines einzelnen Transponders problemlos möglich ist.

In diesem Zusammenhang ist es bereits bekannt, die einzelnen Transponder so auszubilden, dass Ihre Resonanzfrequenz jeweils ohne den Einfluss weiterer Transponder deutlich oberhalb der verwendeten Sendefrequenz des Endgeräts liegt. Durch die induktive Kopplung mit weiteren Transpondern wird die Resonanzfrequenz der Transponder so verstimmt, dass sie sich der Sendefrequenz annähert und somit eine Energie- und Datenübertragung möglich ist. Eine derartige Vorgehensweise ist in APPLICATION NOTE NI-17.0K N 0591, Docu-No: 104820 "Multiple Contactless Chips in Passports - 4 e-Visa + 1 e-Passport" (November 2004) Philips Semiconductors offenbart. Dort wird ein Ausweisdokument mit mehreren Transpondern ausgestattet, wobei ein Transponder als ein elektronischer Ausweis und weitere Transponder als elektronische Visa dienen. Die einzelnen Transponder weisen eine Resonanzfrequenz deutlich oberhalb der vorgesehenen Sendefrequenz auf, die jedoch durch die gegenseitige Beeinflussung auf einen geeigneten Wert reduziert wird. Vorzugsweise weist der Transponder für den elektronischen Ausweis eine größere Antennenspule auf als die Transponder für die elektronischen Visa.

Aus "Electronic passport and electronic visa, Air interface" ISO/IEC JTC1/SC17/WG 8 N 1088 von Infineon, Philips ist ebenfalls ein Ausweisdokument mit mehreren Transpondern bekannt, die als elektronischer Ausweis bzw. als elektronische Visa dienen. Auch dort wird eine Erhöhung der Resonanzfrequenz der einzelnen Transponder relativ zur vorgesehenen Sendefrequenz vorgeschlagen. Außerdem sind dort verschiedene Szenarien hinsichtlich der Erfüllung von Norm-Vorgaben durch den Ausweis-Transponder und die Visa-Transponder beschrieben.

Die DE 199 50 145 C1 offenbart ein Verfahren zum Auslesen und Beschreiben von RFID-Transpondern mit induktiver Kopplung unter Verwendung einer Schreib-/ Lese-Einheit. Bei diesem Verfahren wird die Sendefrequenz von einer Grundfrequenz, die der Resonanzfrequenz der Transponder entspricht, auf einen festgelegten alternativen Wert herabgesetzt, um eine sichere Kommunkation zu gewährleisten. Wenn primär eine hohe Reichweite erzielt werden soll, wird als Sendefrequenz die Grundfrequenz verwendet.

Aus der WO 98/36507 ist eine Einrichtung zur berührungslosen Datenübertragung (Transponder) bekannt, die induktive und kapazitive Koppelelemente aufweist. Dabei erfolgt die Energieversorgung des Transponders induktiv, die Daten werden jedoch kapazitiv übertragen.

Aus WO 2005/031 983 A2 ist eine weitere Einrichtung zur berührungslosen Datenübertragung bekannt.

Der Erfindung liegt die Aufgabe zugrunde, eine kontaktlose Übertragung von Energie und/oder Daten zwischen einem Endgerät und einem Transponder, in dessen Umgebung wenigstens ein weiterer Transponder angeordnet ist, möglichst optimal zu gestalten.

Diese Aufgabe wird durch einen Transponder nach Anspruch 1 gelöst.

Beim erfindungsgemäßen Verfahren werden Energie und/oder Daten zwischen einem Endgerät und wenigstens einem von mehreren Transpondern, die benachbart zueinander angeordnet sind, kontaktlos übertragen. Die Übertragung von Energie und/ oder Daten wird über eine induktive und/ oder über eine kapazitive Kopplung des wenigstens einen Transponders mit dem Endgerät durchgeführt. Die Transponder werden wenigstens für einen Zeitraum der Übertragung von Energie und/oder Daten induktiv und kapazitiv miteinander gekoppelt.

Die Erfindung hat den Vorteil, dass die Übertragung von Energie und/oder Daten mit dem gleichen Endgerät auch bei einer variierenden Anzahl von infolge ihrer räumlichen Nähe untereinander gekoppelten Transpondern möglich ist. Die Kombination aus der induktiven und der kapazitiven Kopplung der Transponder untereinander hat zur Folge, dass die Abhängigkeit der Resonanzfrequenz von der Anzahl der gekoppelten Transponder weniger stark ausgeprägt ist als bei einer rein induktiven Kopplung.

Die Übertragung von Energie und/oder Daten kann beispielsweise zwischen einem Endgerät und einem Transponder durchgeführt werden, der in einem Stapel mehrerer Transponder angeordnet ist. Es entfällt somit der Aufwand für eine Vereinzelung der Transponder, soweit dies überhaupt möglich ist, im Vorfeld der Datenübertragung.

Bevorzugt wird die Übertragung von Energie und/ oder Daten bei einer Frequenz durchgeführt, die unterhalb der Resonanzfrequenz des wenigstens einen Transponders ohne Berücksichtigung der Kopplung mit den weiteren Transpondern und oberhalb der Resonanzfrequenz des wenigstens einen Transponders bei Berücksichtigung der Kopplung mit den weiteren Transpondern liegt.

Beispielsweise kann die Übertragung von Energie und/oder Daten über eine induktive Kopplung gemäß der Norm ISO/ IEC 14443 durchgeführt werden. Diese Übertragungsart ist vielfältig erprobt und kann bei den unterschiedlichsten Anwendungen eingesetzt werden.

Im Rahmen des erfindungsgemäßen Verfahrens ist es vorteilhaft, wenn für die Übertragung von Energie und/oder Daten über eine kapazitive Kopplung der wenigstens eine Transponder relativ zum Endgerät so angeordnet wird, dass sich kapazitive Gerätekoppelflächen des Endgeräts und kapazitive Koppelflächen des wenigstens einen Transponders wenigstens bereichsweise lateral überlappen. Auf diese Weise kann ein guter Wirkungsgrad bei der Übertragung erzielt werden.

Die Transponder können induktiv miteinander gekoppelt werden, indem sie so zueinander angeordnet werden, dass sich Antennenspulen mehrerer Transponder wenigstens bereichsweise lateral überlappen. Eine besonders starke Kopplung kann dadurch erzielt werden, dass die Transponder so zueinander angeordnet werden, dass die Antennenspulen mehrerer Transponder eine gemeinsame Mittelachse ausbilden.

Die Transponder können kapazitiv miteinander gekoppelt werden, indem sie so zueinander angeordnet werden, dass sich die Koppelflächen mehrerer Transponder wenigstens bereichsweise lateral überlappen. Eine besonders starke Kopplung kann dadurch erzielt werden, dass die Transponder so zueinander angeordnet werden, dass die Koppelflächen mehrerer Transponder deckungsgleich übereinander liegen.

Die Erfindung bezieht sich weiterhin auf eine Transponderanordnung mit mehreren Transpondern, die jeweils einen integrierten Schaltkreis und eine am integrierten Schaltkreis angeschlossene Übertragungseinriclitung zur kontaktlosen Übertragung von Energie und/oder Daten aufweisen und untereinander induktiv gekoppelt sind. Die Besonderheit der erfindungsgemä-ßen Transponderanordnung besteht darin, dass die Transponder zusätzlich zur induktiven Kopplung untereinander kapazitiv gekoppelt sind.

Die Transponder weisen bevorzugt jeweils einen flachstückartigen Träger auf. Weiterhin können die Transponder jeweils wenigstens eine Antennenspule aufweisen, über welche die induktive Kopplung erfolgt. Um eine starke induktive Kopplung der Transponder untereinander zu erzielen, können die Antennenspulen mehrerer Transponder wenigstens teilweise lateral überlappen.

Zudem können die Transponder jeweils wenigstens eine Koppelfläche aufweisen, über welche die kapazitive Kopplung erfolgt. Im Sinne einer starken kapazitiven Kopplung ist es von Vorteil, wenn die Koppelflächen mehrerer Transponder wenigstens teilweise lateral überlappen. Bei jedem Transponder können die Koppelflächen bezüglich der Flächenmitte des Trägers punktsymmetrisch zueinander ausgebildet sein. Dies hat den Vorteil, dass die Koppelflächen verschiedener Transponder auch bei einer um 180° verdrehten Anordnung der Transponder gegenseitig zur Deckung kommen. Ebenso ist es auch möglich, dass bei jedem Transponder die Koppelflächen rotationssymmetrisch ausgebildet sind. In diesem Fall kann eine Deckungsgleichheit der Koppelflächen verschiedener Transponder auch für beliebige Verdrehungen erreicht werden.

Die Transponderanordnung ist vorzugsweise so ausgebildet, dass die Antennenspulen der Transponder mit den Koppelflächen jeweils einen Schwingkreis ausbilden. Insbesondere kann je eine Koppelfläche mit je einem Ende einer Antennenspule verbunden sein.

Die Transponder können beispielsweise als Chipkarten ausgebildet sein. Weiterhin besteht die Möglichkeit, dass mehrere Transponder mechanisch miteinander verbunden sind. Die Transponderanordnung kann beispielsweise als ein mehrseitiges Dokument, insbesondere als ein Ausweisdokument, ausgebildet sein, wobei wenigstens einige der Seiten des Dokuments jeweils als ein Transponder ausgebildet sind oder jeweils wenigstens einen Transponder aufweisen.

Alternativ besteht auch die Möglichkeit, dass die Transponder lose übereinander gestapelt sind.

Die Erfindung wird nachstehend anhand der in der Zeichnung dargestellten Ausführungsbeispiele erläutert.

Es zeigen:
- Fig. 1: ein Ausführungsbeispiel für einen nicht erfindungsgemäßen Transponder in Aufsicht,
- Fig. 2: einen Stapel aus mehreren der in Fig.1 dargestellten Transponder in einer schematischen Schnittdarstellung,

- Fig. 3: ein Ausführungsbeispiel für einen erfindungsgemäßen Transponder in Aufsicht,
- Fig. 4: einen Stapel aus mehreren der in Fig. 3 dargestellten Transponder in einer schematischen Schnittdarstellung,
- Fig. 5: ein Ersatzschaltbild für einen Stapel von Transpondern gemäß Fig. 2 oder Fig. 4,
- Fig. 6: eine schematische Darstellung eines Ausführungsbeispiels eines Endgeräts,
- Fig. 7: ein Ersatzschaltbild für eine induktive Kopplung eines Stapels von Transpondern mit einem Endgerät,
- Fig. 8: ein Diagramm für den Verlauf der Amplitude der an den einzelnen Transpondern anliegenden Spannung U als Funktion der vom Endgerät für die Übertragung eingesetzten Frequenz f für den in Fig. 7 dargestellten Fall einer induktiven Kopplung zwischen dem Endgerät und den Transpondern,
- Fig. 9: ein Ersatzschaltbild für eine kapazitive Kopplung eines Stapels von Transpondern mit einem Endgerät und
- Fig.10: ein Diagramm für den Verlauf der Amplitude der an den einzelnen Transpondern anliegenden Spannung U als Funktion der vom Endgerät für die Übertragung eingesetzten Frequenz f für den Fall einer kapazitiven Kopplung zwischen dem Endgerät und den Transpondern.

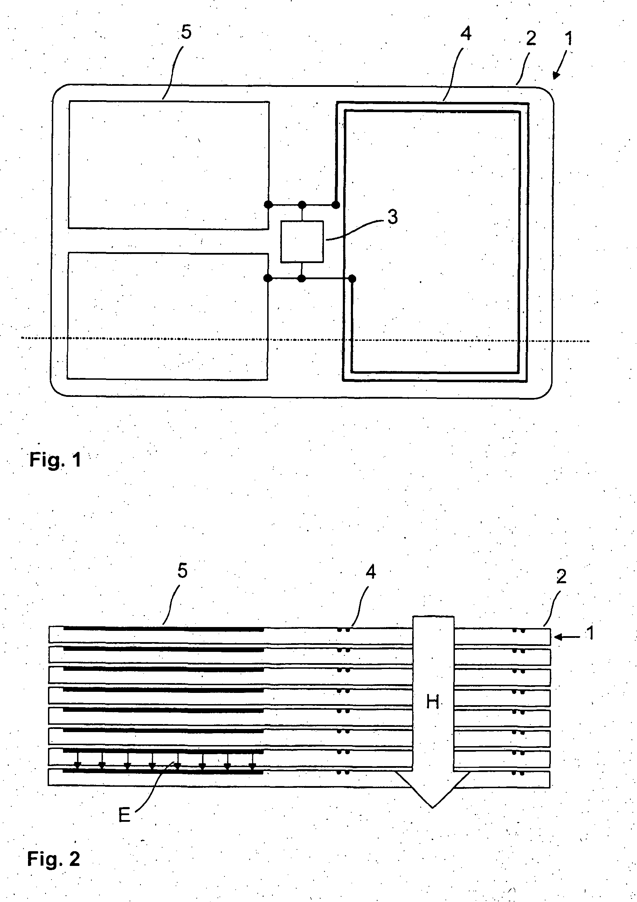

Fig.1 zeigt ein Ausführungsbeispiel für einen nicht erfindungsgemäßen Transponder 1 in Aufsicht.
Der Transponder 1 weist einen Träger 2 auf, der flachstückartig ausgebildet ist und insbesondere aus Papier oder Kunststoff bestehen kann. Je nach Ausführungsbeispiel kann der Träger 2 auch optische Informationen enthalten, beispielsweise Bild- oder Textinformationen, die insbesondere aufgedruckt sein können. Auf dem Träger 2 sind ein integrierter Schaltkreis 3, eine Antennenspule 4 und zwei kapazitive Koppelflächen 5 angeordnet. Die Antennenspule 4 und die Koppelflächen 5 bestehen aus einem elektrisch leitenden Material und können beispielsweise drucktechnisch oder als Metallfolien auf den Träger 2 aufgebracht sein. Dabei besteht die Möglichkeit einer Kombination mit Sicherheitselementen. Insbesondere können die Koppelflächen 5 als großformatige Leadstreifen ausgebildet sein.

Die Antennenspule 4 und die Koppelflächen 5 sind an den integrierten Schaltkreis 3 angeschlossen, wobei je eine Koppelfläche 5 und je ein Ende der Antennenspule 4 miteinander und mit je einem Anschluss des integrierten Schaltkreises 3 verbunden sind. Auf diese Weise wird durch die Antennenspule 4 und die Koppelflächen 5 sowie die Eingangskapazität des integrierten Schaltkreises 3 ein Parallelschwingkreis ausgebildet. Die Resonanzfrequenz des Schwingkreises hängt von der Induktivität L der Antennenspule 4, der parasitären Kapazität Cₚₐᵣₐₛ der Koppelflächen 5 und der Eingangskapazität C_{Chip} des integrierten Schaltkreises 3 ab, der die parasitäre Kapazität Cₚₐᵣₐₛ der Koppelflächen 5 parallel geschaltet ist.

Der in Fig.1 dargestellte Transponder 1 kann beispielsweise mittels eines magnetischen Wechselfelds mit Energie versorgt werden, wobei auch eine kontaktlose Kommunikation mit dem Transponder 1 über das magnetische Wechselfeld erfolgen kann. Wenn für die Trägerfrequenz dieses magnetischen Wechselfelds gemäß ISO/IEC 14443 ein Wert von 13,56 MHz gewählt wird, werden die Antennenspule 4 und die Koppelflächen 5 vorzugsweise so dimensioniert, dass die Resonanzfrequenz des Transponders 1 bei ca.14 MHz bis 16 MHz liegt.

Bei dem in Fig.1 dargestellten Transponder 1 kann es sich beispielsweise um einen elektronischen Ausweis oder um ein elektronisches Visum handeln, die jeweils Bestandteil eines nicht figürlich dargestellten Ausweisdokuments sind, welches mehrere Seiten aufweist, auf denen jeweils ein oder mehrere Transponder 1 angeordnet sind. Dies bedeutet, dass mehrere Transponder 1, insbesondere in Form eines Stapels, unmittelbar benachbart zueinander angeordnet sind. Ein solcher Stapel von Transpondern 1 ist in Fig. 2 dargestellt.

Fig. 2 zeigt einen Stapel aus mehreren der in Fig. 1 dargestellten Transponder 1 in einer schematischen Schnittdarstellung. Der Schnitt ist entlang der in Fig.1 eingezeichneten Linie durch die einzelnen Transponder 1 geführt. Die Schnittflächen sind nicht maßstäblich dargestellt, damit die einzelnen Komponenten der Transponder 1 gut zu erkennen sind. Es wurde deshalb auf eine Schraffur der Schnittflächen verzichtet.

Die Transponder 1 sind so angeordnet, dass die Antennenspulen 4 und die Koppelflächen 5 der einzelnen Transponder 1 jeweils zur Deckung kommen.
Dabei bilden die in Fig.1 oben angeordneten Koppelflächen 5 benachbarter Transponder 1 jeweils einen Koppelkondensator, wobei der Träger 2 als Dielektrikum dient. In analoger Weise bilden auch die in Fig. 1 unten dargestellten Koppelflächen 5 jeweils Koppelkondensatoren aus.

Ein senkrecht zu den Hauptflächen der Träger 2 orientiertes magnetisches Wechselfeld H wirkt auf die Antennenspulen 4 aller Transponder 1 ein. In analoger Weise bildet sich zwischen den Koppelflächen 5 aller Transponder 1 ein senkrecht zu den Hauptflächen der Träger 2 orientiertes elektrisches Wechselfeld E aus.

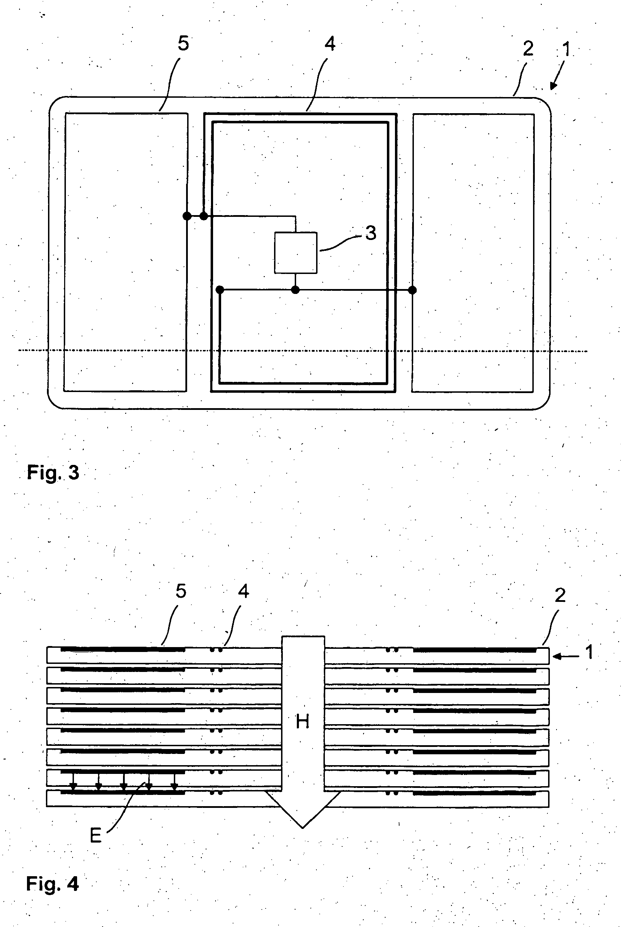

Fig. 3 zeigt ein Ausführungsbeispiel für einen erfindungsgemäßen Transponder 1 in Aufsicht. Das in Fig. 3 dargestellte Ausführungsbeispiel des Transponders 1 entspricht weitgehend dem Ausführungsbeispiel der Fig.1. Ein Unterschied besteht lediglich hinsichtlich der Ausbildung und Anordnung der Antennenspule 4 und der Koppelflächen 5. Beim Ausführungsbeispiel der Fig. 3 ist die Antennenspule 4 mittig zwischen den beiden Koppelflächen 5 angeordnet. Dies hat zur Folge, dass die Antennenspulen 4 und die Koppelflächen 5 mehrerer Transponder 1 immer deckungsgleich übereinander liegen, wenn die Transponder 1 bündig übereinander gestapelt werden. Dabei ist es im. Gegensatz zum Ausführungsbeispiel der Fig.1 nicht erforderlich, beim Stapeln auf die Anordnung der Antennenspulen 4 und der Koppelflächen 5 auf den Trägern 2 zu achten. Ein Stapel von Transpondern 1 gemäß Fig. 3 ist in Fig. 4 dargestellt.

Fig. 4 zeigt einen Stapel aus mehreren der in Fig. 3 dargestellten Transponder 1 in einer schematischen Schnittdarstellung. Die Art der Darstellung wurde entsprechend Fig. 2 gewählt. Wie bei dem in Fig. 2 dargestellten Stapel liegen wiederum die. Antennenspulen 4 bzw. die Koppelflächen 5 der verschiedenen Transponder 1 deckungsgleich übereinander.

Gemäß einem nicht erfindungsgemäßen Ausführungsbeispiel, das nicht figürlich dargestellt ist, sind die Koppelflächen 5 des Transponders 1 rotationssymmetrisch ausgebildet und konzentrisch zueinander angeordnet. Bei diesem Ausführungsbeispiel können die Transponder 1 in einer beliebigen relativen Verdrehung zueinander gestapelt werden.

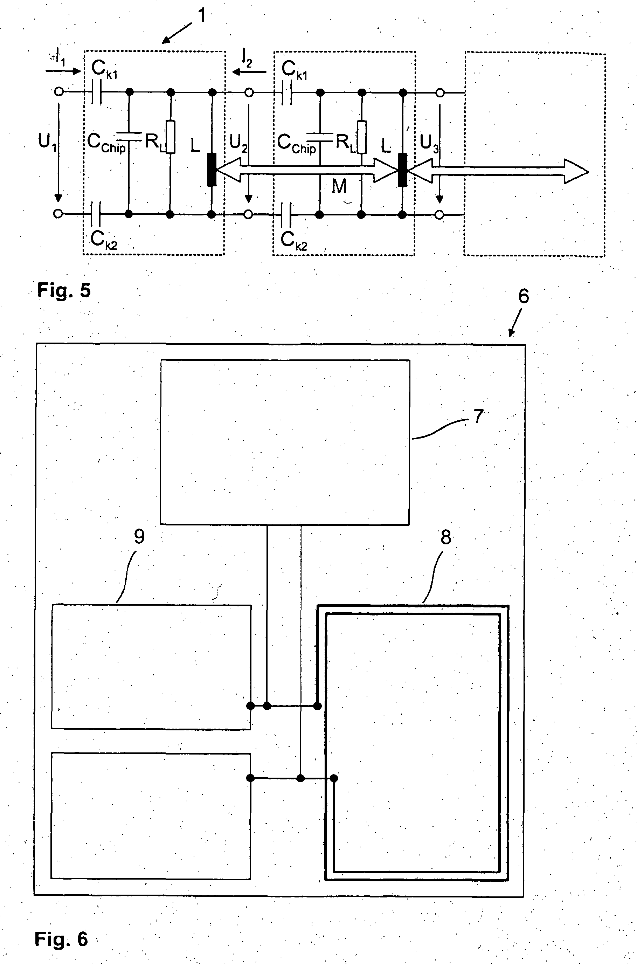

Fig. 5 zeigt ein Ersatzschaltbild für einen Stapel von Transpondern 1 gemäß Fig. 2 oder Fig. 4. Im Ersatzschaltbild ist für jeden Transponder 1 die Induktivität L der Antennenspule 4 und die dazu parallel geschaltete Eingangskapazität C_{Chip} des integrierten Schaltkreises 3 dargestellt. Weiterhin ist jeweils noch ein Lastwiderstand R_{L} eingezeichnet, der die Leistungsaufnahme des integrierten Schaltkreises 3 repräsentiert und der Eingangskapazität C_{Chip} des integrierten Schaltkreises 3 parallel geschaltet ist. Neben der Eingangskapazität C_{Chip} weist der Transponder unter anderem in der Spule weitere parasitäre Kapazitäten auf, die jedoch der einfacheren Darstellung halber nicht eingezeichnet sind. Diese zusätzlichen Kapazitäten können als der Eingangskapazität C_{Chip} parallel geschaltet betrachtet werden.

Die kapazitive Kopplung jeweils benachbarter Koppelflächen 5 ist durch je eine Koppelkapazität Cₖ₁ bzw. Cₖ₂ für jede der beiden Koppelflächen 5 jedes Transponders 1 veranschaulicht. Die Koppelkapazitäten Cₖ₁, Cₖ₂ sind jeweils in Serie zwischen die Parallelschaltungen aus Induktivität L der Antennenspule 4, Eingangskapazität C_{Chip} des integrierten Schaltkreises 3 und Lastwiderstand R_{L} des integrierten Schaltkreises 3 zweier benachbarter Transponder 1 geschaltet. Zwischen den Antennenspulen 4 benachbarter Transponder 1 besteht eine induktive Kopplung, die jeweils durch eine Gegeninduktivität M veranschaulicht ist.

Weiterhin ist in Fig. 5 noch die an jedem Transponder 1 anliegende Spannung U₁, U₂, U₃ usw. sowie der zwischen benachbarten Transpondern 1 flie-ßende Strom I₁, I₂ usw. eingezeichnet.

Fig. 6 zeigt eine schematische Darstellung eines Ausführungsbeispiels eines Endgeräts 6. Das Endgerät 6 weist eine Elektronik 7 auf, an die eine Geräteantennenspule 8 und zwei kapazitive Gerätekoppelflächen 9 angeschlossen sind. Die Elektronik 7 erzeugt einen modulierten Wechselstrom bzw. eine modulierte Wechselspannung. Der Wechselstrom wird der Geräteantennenspule 8 zugeführt, die Wechselspannung wird an die Gerätekoppelflächen 9 angelegt. Beim dargestellten Ausführungsbeispiel sind der Wechselstrom und die Wechselspannung infolge der Parallelschaltung der Geräteantennenspule 8 und der Gerätekoppelflächen 9 nicht unabhängig voneinander, sondern bedingen sich gegenseitig. Das Endgerät 6 kann aber auch so abgewandelt werden, dass die Elektronik 7 wahlweise die Geräteantennenspule 8 oder die Gerätekoppelflächen 9 ansteuern kann.

Die Geräteantennenspule 8 dient einer Übertragung von Energie und/oder Daten über eine induktive Kopplung des Endgeräts 6 mit einem Transponder 1 oder mehreren Transpondern 1. Hierzu wird von der Geräteantennenspule 8 abhängig vom Wechselstrom der Elektronik 7 ein magnetisches . Wechselfeld erzeugt, das in der Antennenspule 4 des Transponders 1 eine Spannung induziert.

Mit den Gerätekoppelflächen 9 wird beim Anlegen der Wechselspannung der Elektronik 7 ein elektrisches Feld erzeugt, das auf die Koppelflächen 5 des Transponders 1 einwirkt. Auf diese Weise werden mit den Gerätekoppelflächen 9 Energie und/oder Daten über eine kapazitive Kopplung des Endgeräts 6 mit einem Transponder 1 oder mehreren Transpondern 1 übertragen.

Um eine gute Kopplung zu ermöglichen, können die Geräteantennenspule 8 und die Gerätekoppelflächen 9 hinsichtlich ihren Abmessungen und ihrer Anordnung der Antennenspule 4 und den Koppelflächen 5 des in Fig.1 dargestellten Ausführungsbeispiels, des Transponders 1 entsprechen. Alternativ dazu kann für die Geräteantennenspule 8 und die Gerätekoppelflächen 9 auch eine Geometrie entsprechend dem in Fig. 3 dargestellten Ausführungsbeispiel des Transponders 1 gewählt werden. Ebenso ist es auch möglich, das Endgerät 6 ausschließlich für eine induktive Kopplung oder ausschließlich für eine kapazitive Kopplung mit den Transpondern 1 vorzusehen und dem entsprechend auf die Gerätekoppelflächen 9 oder die Geräteantennenspule 8 zu verzichten. Im Falle einer rein induktiven Kopplung kann es sich bei dem Endgerät 6 beispielsweise um ein handelsübliches kontaktloses Lesegerät insbesondere nach der Norm ISO/IEC 14443 handeln.

Falls mehrere Transponder 1 nahe beieinander angeordnet sind, wie dies beispielsweise bei den in Fig. 2 und Fig. 4 dargestellten Stapeln der Fall ist, wird die induktive Übertragung von Energie und/ oder Daten zwischen dem Endgerät 6 und einem oder mehreren Transpondern 1 sowohl durch die induktive als auch durch die kapazitive Kopplung der Transponder 1 untereinander beeinflusst. Sowohl die induktive als auch die kapazitive Kopplung der Transponder 1 untereinander beeinflusst deren Resonanzfrequenz. Dies wird im folgenden näher erläutert.

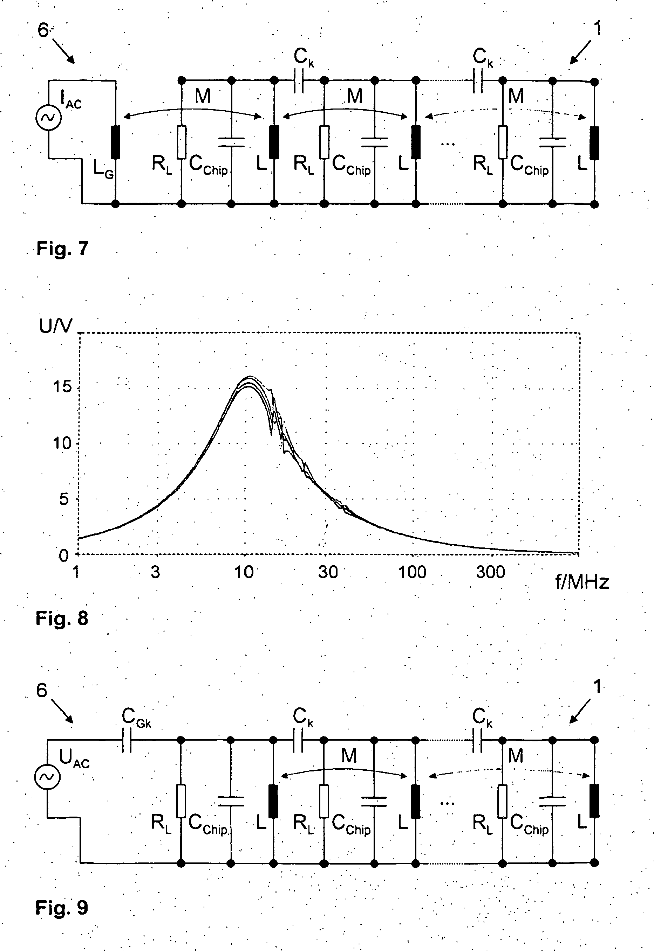

Fig. 7 zeigt ein Ersatzschaltbild für eine induktive Kopplung eines Stapels von Transpondern 1 mit einem Endgerät 6. Der Stapel besteht beispielsweise aus fünf Transpondern 1, wobei in Fig. 7 die Schaltungselemente von drei Transpondern 1 explizit dargestellt sind. Die Schaltungselemente sind entsprechend Fig. 5 bezeichnet. Allerdings sind die Koppelkapazitäten C₁ₖ und C₂ₖ jeweils zu einer einzigen Koppelkapazität Cₖ zusammengefasst, die bedingt durch die Serienschaltung jeweils einen Kapazitätswert aufweist, der halb so groß ist wie der Kapazitätswert der einzelnen Koppelkapazitäten Cₖ₁ und Cₖ₂.

Abgesehen von der Zusammenfassung der Koppelkapazitäten C₁ₖ und C₂ₖ entspricht das Ersatzschaltbild der Transponder 1 gemäß Fig. 7 der Darstellung in Fig. 5. Dies bedeutet, dass pro Transponder 1 die Induktivität L der Antennenspule 4, die Eingangskapazität C_{Chip} des integrierten Schaltkreises 3 und der Lastwiderstand R_{L} des integrierten Schaltkreises 3 parallel geschaltet sind. Die einzelnen Transponder 1 sind durch je eine Koppelkapazität Cₖ gekoppelt.

Beim dargestellten Ausführungsbeispiel betragen die Induktivitäten L der Antennenspulen 4 der Transponder 1 jeweils ca. 3 µH, die Eingangskapazitäten C_{Chip} der integrierten Schaltkreise 3 jeweils ca.15 pF bis 17 pF und die Lastwiderstände R_{L} der integrierten Schaltkreise 3 jeweils ca.1 kΩ.

Die Elektronik 7 des Endgeräts 6 ist im Ersatzschaltbild als eine Wechselstromquelle I_{AC} und die an die Elektronik 7 angeschlossene Geräteantennenspule 8 als eine Induktivität L_{G} dargestellt. Gespeist von der Wechselstromquelle I_{A}c erzeugt die Induktivität L_{G} der Geräteantennenspule 8 ein magnetisches Wechselfeld, das in den Induktivitäten L der Antennenspulen 4 der Transponder 1 jeweils eine Spannung induziert. Diese Spannung hängt unter anderem von der Frequenz des magnetischen Wechselfelds und den Resonanzfrequenzen der Transponder 1 ab. Die Amplituden der auf diese Weise in den einzelnen Transpondern 1 erzeugten Spannungen sind in Fig. 8 dargestellt.

Fig. 8 zeigt ein Diagramm für den Verlauf der Amplitude der an den einzelnen Transpondern 1 anliegenden Spannung U als Funktion der vom Endgerät 6 für die Übertragung eingesetzten Frequenz f für den in Fig. 7 dargestellten Fall einer induktiven Kopplung zwischen dem Endgerät 6 und den Transpondern 1.

Der Verlauf der Spannungsamplitude ist für alle Transponder 1 ähnlich und weist ein Maximum bei einer Frequenz von ca.10 MHz auf. Dies bedeutet, dass die gemeinsame Resonanzfrequenz der Transponder 1 bei ca.10 MHz liegt. Die Resonanzfrequenz jedes einzelnen Transponders 1 ohne Kopplung mit weiteren Transpondern 1 liegt bei etwa 14 MHz.

Würden die Transponder 1 ausschließlich induktiv gekoppelt, d. h. lediglich über die Induktivitäten L der Antennenspulen 4 und nicht über die von den Koppelflächen 5 hervorgerufenen Koppelkapazitäten Ck, so ergäbe sich eine gemeinsame Resonanzfrequenz der Transponder 1 von ca. 6,2 MHz. Dies bedeutet, dass durch die kapazitive Kopplung der Transponder 1 untereinander die durch die induktive Kopplung bewirkte Verstimmung der Resonanzfrequenz deutlich reduziert wird. Der Einsatz von Transpondern 1 mit Koppelflächen 5 ermöglicht somit auch dann eine zuverlässige Energie- und Datenübertragung, wenn die Anzahl der Transponder 1 in einem Stapel von einer vorgegebenen optimalen Anzahl abweicht.

Fig. 9 zeigt ein Ersatzschaltbild für eine kapazitive Kopplung eines Stapels von Transpondern 1 mit einem Endgerät 6. Die Ersatzschaltbilder der einzelnen Transponder 1 und die kapazitive Kopplung der Transponder 1 untereinander durch die Koppelkapazitäten Cₖ sind mit der Darstellung der Fig. 7 identisch. Der weiteren Beschreibung wird eine Anzahl von sechs Transpondern 1 im Stapel zugrunde gelegt, wobei im Ersatzschaltbild die Schaltungskomponenten von drei Transpondern 1 explizit dargestellt sind.

Das Endgerät 6 ist im Ersatzschaltbild abweichend von Fig. 7 durch eine Wechselspannungsquelle U_{AC,} welche die Elektronik 7 repräsentiert und eine daran angeschlossene Gerätekoppelkapazität C_{Gk} dargestellt. Die Gerätekoppelkapazität C_{Gk} wird durch eine Zusammenwirkung der Gerätekoppelflächen 9 des Endgeräts 6 mit den Koppelflächen 5 des Transponders 1, der dem Endgerät 6 benachbart ist, ausgebildet. Über die Gerätekoppelkapazität C_{Gk} ist das Endgerät 6 mit dem Transponder 1 gekoppelt. Für eine möglichst gute Kopplung werden die Koppelflächen 5 des Transponders 1 mit den Gerätekoppelflächen 9 des Endgeräts 6 zur Deckung gebracht.

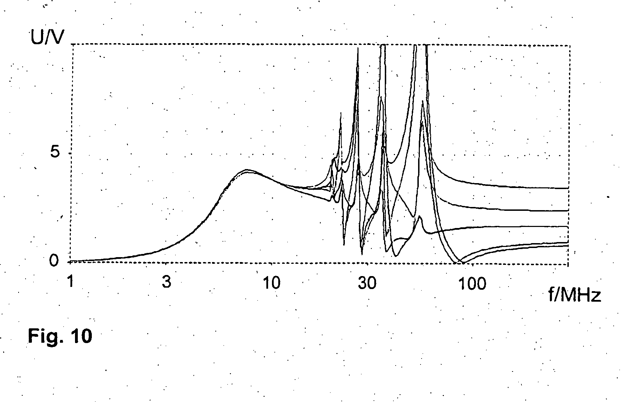

Die Wechselspannungsquelle U_{AC} erzeugt eine modulierte Wechselspannung, welche den Gerätekoppelflächen 9 des Endgeräts 6 zugeführt wird und über die Gerätekoppelkapazität C_{Gk} und die zwischen den Transpondern 1 ausgebildeten Koppelkapazitäten Cₖ in die Transponder 1 eingekoppelt wird. Die Amplitude der auf diese Weise kontaktlos an die Transponder 1 übertragenen Spannung ist in Fig. 10 dargestellt.

Fig.10 zeigt ein Diagramm für den Verlauf der Amplitude der an den einzelnen Transpondern 1 anliegenden Spannung U als Funktion der vom Endgerät 6 für die Übertragung eingesetzten Frequenz f für den Fall einer kapazitiven Kopplung zwischen dem Endgerät 6 und den Transpondern 1.

In einem weiten Frequenzbereich von ca. 8 MHz bis ca. 25 MHz ändert sich die Amplitude der Spannung U nur sehr wenig, so dass in diesem Frequenzbereich eine zuverlässige Übertragung von Energie und Daten möglich ist. Dabei ist auch bei einer kapazitiven Kopplung des Endgeräts 6 mit den Transpondern 1 in Kombination mit einer kapazitiven und induktiven Kopplung der Transponder 1 untereinander die Verstimmung der Resonanzfrequenz wesentlich weniger stark von der Anzahl der Transponder 1 abhängig als dies bei einer rein induktiven Kopplung der Transponder 1 untereinander der Fall wäre.

Wie vorstehend im einzelnen erläutert, kann im Rahmen der Erfindung eine induktive oder eine kapazitive Übertragung von Energie und/oder Daten vom Endgerät 6 zu den Transpondern 1 durchgeführt werden. Ebenso ist es auch möglich, beide Übertragungsarten gemeinsam einzusetzen.

Die Datenübertragung von den Transpondern 1 zum Endgerät 6 kann ebenfalls induktiv und/oder kapazitiv erfolgen. Dabei besteht insbesondere auch die Möglichkeit die jeweils andere Übertragungsart zu verwenden als für die Übertragung vom Endgerät 6 zu den Transpondern 1 vorgesehen ist.

Außerdem ist es beispielsweise möglich, dass die Transponder 1 im Stapel über eine induktive Kopplung vom Endgerät 6 mit Energie und Daten versorgt werden und die Datenübertragung von den Transpondern 1 zum Endgerät 6 sowohl über eine induktive als auch über eine kapazitive Kopplung durchgeführt wird. Wenn die Datenübertragung gleichzeitig über eine induktive und eine kapazitive Kopplung durchgeführt wird, kann die Empfangsempfindlichkeit durch den Einsatz von Korrelationsverfahren verbessert werden.

Der Erfindungsgedanke, nahe zueinander angeordnete Transponder 1 untereinander sowohl induktiv als auch kapazitiv zu koppeln und dadurch die Abhängigkeit der Verstimmung der Resonanzfrequenz von der Anzahl der gekoppelten Transponder 1 zu reduzieren lässt sich, wie vorstehend beschrieben, für die Energie- und/ oder Datenübertragung zwischen einem Endgerät 6 und einem Stapel aus mehreren einzelnen Transpondern 1 nutzen. Dabei können die einzelnen Transponder 1 beispielsweise als Chipkarten, als elektronische Jetons in Spielbanken, als elektronische Tickets, als Banknoten usw. ausgebildet sein.

Ebenso ist es auch möglich den Erfindungsgedanken bei .einem Ausweisdokument oder ähnlichen Dokumenten zu verwenden, die auf mehreren Seiten je einen oder mehrere Transponder 1 aufweisen. Die Transponder 1 können sowohl auf den Umschlagseiten als auch auf den Innenseiten des Ausweisdokuments angeordnet sein. Insbesondere können die Transponder 1 durch ein Laminationsverfahren mit den jeweiligen Seiten des Ausweisdokuments verbunden sein. Dabei können die Transponder 1 jeweils als ein elektronischer Ausweis oder als ein elektronisches Visum ausgebildet sein. Um eine Kommunikation mit den Transpondern 1 sowohl im geschlossenen als auch im geöffneten Zustand des Ausweisdokuments und unabhängig von der Anzahl der vorhandenen Transponder 1 zu ermöglichen, sollte der Einfluss der Anzahl der gekoppelten Transponder 1 auf die Resonanzfrequenz möglichst gering sein. Die Anzahl der Transponder 1 kann beispielsweise dadurch variieren, dass zusätzliche elektronische Visa in das Ausweisdokument aufgenommen werden.

## Patentansprüche

1. Transponder (1), der einen integrierten Schaltkreis (3), eine am integrierten Schaltkreis (3) angeschlossenen Antennenspule (4), und zwei am integrierten Schaltkreis angeschlossene Koppelflächen (5) aufweist und welcher flachstückartig ausgebildet ist, wobei die Antennenspule (4) und die Koppelflächen (5) aus einem elektrisch leitenden Material bestehen und an den integrierten Schaltkreis (3) angeschlossen sind, wobei je eine Koppelfläche (5) und je ein Ende der Antennenspule (4) miteinander und mit je einem Anschluss des integrierten Schaltkreises verbunden sind, **dadurch gekennzeichnet, dass** die Antennenspule (4) mittig zwischen den beiden Koppelflächen (5) angeordnet ist.

2. Transponderanordnung mit mehreren benachbart zueinander angeordneten Transpondern (1) nach Anspruch 1, **dadurch gekennzeichnet, dass** die Transponder (1) untereinander kapazitiv über die Koppelflächen (5) und induktiv über die Antennenspule (4) gekoppelt sind.

3. Transponderanordnung nach Anspruch 2, **dadurch gekennzeichnet, dass** bei jedem Transponder (1) die Koppelflächen (5) bezüglich der Flächenmitte des Trägers (2) punktsymmetrisch zueinander ausgebildet sind.

4. Transponderanordnung nach einem der Ansprüche 2 oder 3, **dadurch gekennzeichnet, dass** die Antennenspulen (4) mehrerer Transponder (1) wenigstens teilweise lateral überlappen.

5. Transponderanordnung nach einem der Ansprüche 2 bis 4, **dadurch gekennzeichnet, dass** die Koppelflächen (5) mehrerer Transponder (1) wenigstens teilweise lateral überlappen.

6. Transponderanordnung nach einem der Ansprüche 2 bis 5, **dadurch gekennzeichnet, dass** die Transponder (1) als Chipkarten ausgebildet sind.

7. Transponderanordnung nach einem der Ansprüche 2 bis 6, **dadurch gekennzeichnet, dass** mehrere Transponder (1) mechanisch miteinander verbunden sind.

8. Transponderanordnung nach einem der Ansprüche 2 bis 7, **dadurch gekennzeichnet**, das sie als ein mehrseitiges Dokument, insbesondere als ein Ausweisdokument, ausgebildet ist, wobei wenigstens einige der Seiten des Dokuments jeweils als ein Transponder (1) ausgebildet sind oder jeweils wenigstens einen Transponder (1) aufweisen.

9. Transponderanordnung nach einem der Ansprüche 2 bis 7, **dadurch gekennzeichnet, dass** die Transponder (1) lose übereinander gestapelt sind.

10. Verfahren zur kontaktlosen Übertragung von Energie und/oder Daten zwischen einem Endgerät (6) und wenigstens einem von mehreren Transpondern (1) gemäß Anspruch 1, die benachbart zueinander angeordnet sind, wobei die Übertragung von Energie und/oder Daten über eine induktive und/oder über eine kapazitive Kopplung des wenigstens einen Transponders (1) mit dem Endgerät (6) durchgeführt wird, **dadurch gekennzeichnet, dass** die Transponder wenigstens für einen Zeitraum der Übertragung von Energie und/oder Daten induktiv und kapazitiv miteinander gekoppelt werden.

11. Verfahren nach Anspruch 10, **dadurch gekennzeichnet, dass** die Übertragung von Energie und/oder Daten zwischen einem Endgerät (6) und einem Transponder (1) durchgeführt wird, der in einem Stapel mehrerer Transponder (1) angeordnet ist.

12. Verfahren nach einem der Ansprüche 10-11, **dadurch gekennzeichnet, dass** die Übertragung von Energie und/oder Daten bei einer Frequenz durchgeführt wird, die unterhalb der Resonanzfrequenz des wenigstens einen Transponders (1) ohne Berücksichtigung der Kopplung mit den weiteren Transpondern (1) und oberhalb der Resonanzfrequenz des wenigstens einen Transponders (1) bei Berücksichtigung der Kopplung mit den weiteren Transpondern (1) liegt.

13. Verfahren nach einem der Ansprüche 10-12, **dadurch gekennzeichnet, dass** die Übertragung von Energie- und/ oder Daten über eine induktive Kopplung gemäß der Norm ISO/IEC 14443 durchgeführt wird.

14. Verfahren nach einem der Ansprüche 10-13, **dadurch gekennzeichnet, dass** für die Übertragung von Energie- und/ oder Daten über eine kapazitive Kopplung der wenigstens eine Transponder (1) relativ zum Endgerät (6) so angeordnet wird, dass sich kapazitive Gerätekoppelflächen (9) des Endgeräts (6) und kapazitive Koppelflächen (5) des wenigstens einen Transponders (1) wenigstens bereichsweise lateral überlappen.

15. Verfahren nach einem der Ansprüche 10-14, **dadurch gekennzeichnet, dass** die Transponder (1) induktiv miteinander gekoppelt werden, indem sie so zueinander angeordnet werden, dass sich Antennenspulen (4) mehrerer Transponder (1) wenigstens bereichsweise lateral überlappen.

16. Verfahren nach Anspruch 15, **dadurch gekennzeichnet, dass** die Transponder (1) so zueinander angeordnet werden, dass die Antennenspulen (4) mehrerer Transponder (1) eine gemeinsame Mittelachse ausbilden.

17. Verfahren nach einem der Ansprüche 10-16, **dadurch gekennzeichnet, dass** die Transponder (1) kapazitiv miteinander gekoppelt werden, indem sie so zueinander angeordnet werden, dass sich die Koppelflächen (5) mehrerer Transponder (1) wenigstens bereichsweise lateral überlappen.

18. Verfahren nach Anspruch 17, **dadurch gekennzeichnet, dass** die Transponder (1) so zueinander angeordnet werden, dass die Koppelflächen (5) mehrerer Transponder (1) deckungsgleich übereinander liegen.

## Claims

1. A transponder (1) having an integrated circuit (3), an antenna coil (4) connected to the integrated circuit (3) and two coupling faces (5) connected to the integrated circuit, and being configured in the fashion of a flat piece, wherein the antenna coil (4) and the coupling faces (5) consist of an electroconductive material and are connected to the integrated circuit (3), wherein respectively one coupling face (5) and respectively one end of the antenna coil (4) are interconnected and connected with respectively one connector of the integrated circuit, **characterized in that** the antenna coil (4) is arranged centrally between the two coupling faces (5).

2. A transponder arrangement having several transponders (1) according to claim 1 arranged in mutually adjacent fashion, **characterized in that** the transponders (1) are mutually coupled capacitively via the coupling faces (5) and inductively via the antenna coil (4).

3. The transponder arrangement according to claim 2, **characterized in that** in every transponder (1) the coupling faces (5) are configured to be mutually point-symmetric with reference to the center of the surface of the carrier (2).

4. The transponder arrangement according to any of the claims 2 or 3, **characterized in that** the antenna coils (4) of several transponders (1) overlap laterally at least partly.

5. The transponder arrangement according to any of the claims 2 to 4, **characterized in that** the coupling faces (5) of several transponders (1) overlap laterally at least partly.

6. The transponder arrangement according to any of the claims 2 to 5, **characterized in that** the transponders (1) are configured as chip cards.

7. The transponder arrangement according to any of the claims 2 to 6, **characterized in that** several transponders (1) are mechanically interconnected.

8. The transponder arrangement according to any of the claims 2 to 7, **characterized in that** it is configured as a multipage document, in particular as an identification document, wherein at least some of the pages of the document are configured respectively as a transponder (1) or have respectively at least one transponder (1).

9. The transponder arrangement according to any of the claims 2 to 7, **characterized in that** the transponders (1) are loosely stacked one above the other.

10. A method for the contactless transmission of energy and/or data between a terminal (6) and at least one of several transponders (1) according to claim 1 which are arranged to be mutually adjacent, wherein the transmission of energy and/or data is carried out via an inductive and/or a capacitive coupling of the at least one transponder (1) with the terminal (6), **characterized in that** the transponders are coupled with each other inductively and capacitively at least for a time period of transmission of energy and/or data.

11. The method according to claim 10, **characterized in that** the transmission of energy and/or data is carried out between a terminal (6) and a transponder (1) that is arranged in a stack of several transponders (1).

12. The method according to any of the claims 10 to 11, **characterized in that** the transmission of energy and/or data is carried out at a frequency that is below the resonant frequency of the at least one transponder (1) without consideration of the coupling with the further transponders (1), and above the resonant frequency of the at least one transponder (1) with consideration of the coupling with the further transponders (1).

13. The method according to any of the claims 10 to 12, **characterized in that** the transmission of energy and/or data is carried out via an inductive coupling according to the standard ISO/IEC 14443.

14. The method according to any of the claims 10 to 13, **characterized in that** for the transmission of energy and/or data via a capacitive coupling, the at least one transponder (1) is so arranged relative to the terminal (6) that capacitive device coupling faces (9) of the terminal (6) and capacitive coupling faces (5) of the at least one transponder (1) overlap laterally at least in some regions.

15. The method according to any of the claims 10 to 14, **characterized in that** the transponders (1) are mutually coupled inductively by so mutually arranging them that the antenna coils (4) of several transponders (1) overlap laterally at least in some regions.

16. The method according to claim 15, **characterized in that** the transponders (1) are so mutually arranged that the antenna coils (4) of several transponders (1) form a common center axis.

17. The method according to any of the claims 10 to 16, **characterized in that** the transponders (1) are mutually coupled capacitively by so mutually arranging them that the coupling faces (5) of several transponders (1) overlap laterally at least in some regions.

18. The method according to claim 17, **characterized in that** the transponders (1) are so mutually arranged that the coupling faces (5) of several transponders (1) are superposed congruently.

## Revendications

1. Transpondeur (1) qui comporte un circuit intégré (3), une bobine d'antenne (4) reliée au circuit intégré (3) et deux surfaces de couplage (5) reliées au circuit intégré, et qui est réalisé sous forme plate, la bobine d'antenne (4) et les surfaces de couplage (5) consistant en un matériau électroconducteur et étant reliées au circuit intégré (3), respectivement une surface de couplage (5) et respectivement une extrémité de la bobine d'antenne (4) étant reliées l'une avec l'autre et avec respectivement une borne du circuit intégré, **caractérisé en ce que** la bobine d'antenne (4) est agencée au milieu entre les deux surfaces de couplage (5)..

2. Agencement de transpondeurs comprenant plusieurs transpondeurs (1) agencés de façon adjacente les uns par rapport aux autres selon la revendication 1, **caractérisé en ce que** les transpondeurs (1) sont couplés entre eux de manière capacitive par l'intermédiaire des surfaces de couplage (5) et de manière inductive par l'intermédiaire de la bobine d'antenne (4).

3. Agencement de transpondeurs selon la revendication 2, **caractérisé en ce que**, sur chaque transpondeur (1), les surfaces de couplage (5) sont réalisées de manière ponctuellement symétrique entre elles par rapport au milieu de la surface du support (2).

4. Agencement de transpondeurs selon une des revendications 2 ou 3, **caractérisé en ce que** les bobines d'antenne (4) de plusieurs transpondeurs (1) se chevauchent latéralement au moins partiellement.

5. Agencement de transpondeurs selon une des revendications de 2 à 4, **caractérisé en ce que** les surfaces de couplage (5) de plusieurs transpondeurs (1) se chevauchent latéralement au moins partiellement.

6. Agencement de transpondeurs selon une des revendications de 2 à 5, **caractérisé en ce que** les transpondeurs (1) sont réalisés en tant que cartes à puce.

7. Agencement de transpondeurs selon une des revendications de 2 à 6, **caractérisé en ce que** plusieurs transpondeurs (1) sont reliés mécaniquement entre eux.

8. Agencement de transpondeurs selon une des revendications de 2 à 7, **caractérisé en ce qu'**il est réalisé sous forme d'un document multipage, notamment sous forme d'un document d'identité, au moins certaines des pages du document étant respectivement réalisées sous forme d'un transpondeur (1) ou comportant respectivement au moins un transpondeur (1).

9. Agencement de transpondeurs selon une des revendications de 2 à 7, **caractérisé en ce que** les transpondeurs (1) sont lâchement empilés les uns sur les autres.

10. Procédé de transmission sans contact d'énergie et/ou de données entre un terminal (6) et au moins un de plusieurs transpondeurs (1) selon la revendication 1 qui sont agencés de façon adjacente les uns par rapport aux autres, la transmission d'énergie et/ou de données étant effectuée par l'intermédiaire d'un couplage inductif et/ou par l'intermédiaire d'un couplage capacitif du au moins un transpondeur (1) avec le terminal (6), **caractérisé en ce que** les transpondeurs sont, au moins pour une durée de la transmission d'énergie et/ou de données, couplés entre eux de manière inductive et capacitive.

11. Procédé selon la revendication 10, **caractérisé en ce que** la transmission d'énergie et/ou de données est effectuée entre un terminal (6) et un transpondeur (1) qui est agencé dans une pile de plusieurs transpondeurs (1).

12. Procédé selon une des revendications 10 - 11, **caractérisé en ce que** la transmission d'énergie et/ou de données est effectuée à une fréquence qui est située au-dessous de la fréquence de résonance du au moins un transpondeur (1) sans prise en compte du couplage avec les autres transpondeurs (1) et au-dessus de la fréquence de résonance du au moins un transpondeur (1) en tenant compte du couplage avec les autres transpondeurs (1).

13. Procédé selon une des revendications 10 - 12, **caractérisé en ce que** la transmission d'énergie et/ou de données est effectuée par l'intermédiaire d'un couplage inductif selon la norme ISO/IEC 14443.

14. Procédé selon une des revendications 10 - 13, **caractérisé en ce que**, pour la transmission d'énergie et/ou de données par l'intermédiaire d'un couplage capacitif , le au moins un transpondeur (1) est agencé de telle manière par rapport au terminal (6) que des surfaces de couplage (9) capacitives d'appareil du terminal (6) et des surfaces de couplage (5) capacitives du au moins un transpondeur (1) se chevauchent latéralement au moins dans certaines zones.

15. Procédé selon une des revendications 10 - 14, **caractérisé en ce que** les transpondeurs (1) sont couplés inductivement les uns aux autres, ce qui est obtenu par le fait qu'ils sont agencés de telle manière les uns par rapport aux autres que des bobines d'antenne (4) de plusieurs transpondeurs (1) se chevauchent latéralement au moins dans certaines zones.

16. Procédé selon la revendication 15, **caractérisé en ce que** les transpondeurs (1) sont agencés de telle manière les uns par rapport aux autres que les bobines d'antenne (4) de plusieurs transpondeurs (1) forment un axe médian commun.

17. Procédé selon une des revendications 10 - 16, **caractérisé en ce que** les transpondeurs (1) sont couplés entre eux de manière capacitive, ce qui est obtenu par le fait qu'ils sont agencés de telle manière les uns par rapport aux autres que des surfaces de couplage (5) de plusieurs transpondeurs (1) se chevauchent latéralement au moins dans certaines zones.

18. Procédé selon la revendication 17, **caractérisé en ce que** les transpondeurs (1) sont agencés de telle manière les uns par rapport aux autres que les surfaces de couplage (5) de plusieurs transpondeurs (1) se superposent de manière coïncidente.
